# EUROPÄISCHE PATENTSCHRIFT

(11) **EP 3 603 379 B1**
(45) Veröffentlichungstag und Bekanntmachung des Hinweises auf die Patenterteilung: **27.07.2022**
(21) Anmeldenummer: 19189143.1
(22) Anmeldetag: 30.07.2019
(51) Int. Cl.: A01D 45/02, A01D 63/02

(54) **ANORDNUNG ZUR SELBSTTÄTIGEN KONTROLLE DES ANTRIEBS EINES SEITLICH AN EINEM ERNTEVORSATZ ANGEBRACHTEN ELEMENTS, DAS ZUR AUFTEILUNG DES ERNTEGUTS AN DER GRENZE ZWISCHEN STEHEN BLEIBENDEM UND ABZUERNTENDEN BESTAND DIENT**
ARRANGEMENT FOR AUTOMATICALLY CONTROLLING THE DRIVE OF AN ELEMENT MOUNTED LATERALLY ON A HARVESTER SET FOR DIVIDING HARVESTED MATERIAL ON THE BOUNDARY BETWEEN MATERIAL TO BE HARVESTED AND MATERIAL TO BE LEFT
DISPOSITIF DE COMMANDE AUTOMATIQUE DE L'ENTRAÎNEMENT D'UN ÉLÉMENT APPLIQUÉ LATÉRALEMENT À UNE TÊTE DE RÉCOLTE, LEQUEL SERT À DISTRIBUER LE PRODUIT DE LA RÉCOLTE À LA FRONTIÈRE ENTRE LA CULTURE À PRÉSERVER ET À RÉCOLTER

(30) Priorität: 01.08.2018 DE 102018212834
(43) Veröffentlichungstag der Anmeldung: 05.02.2020
(73) Patentinhaber: Deere & Company, Moline, IL 61265 (US)
(72) Erfinder: Peiter, Paulo Rodrigo, 68163 Mannheim (DE); Zumbach, Ferdinand, 68163 Mannheim (DE); Bueermann, Martin, 68163 Mannheim (DE); Weichholdt, Dirk, 68163 Mannheim (DE); Pellegrini, Eric, 68163 Mannheim (DE)
(74) Vertreter: Holst, Sönke

(56) Entgegenhaltungen:
- EP-A1- 2 647 276
- DE-A1- 10 206 541
- DE-A1- 10 231 072

## Beschreibung

Die vorliegende Erfindung bezieht sich auf eine Erntemaschine mit einem Erntevorsatz, an dem seitlich ein Element angebracht ist, das zur Aufteilung des Ernteguts an der Grenze zwischen stehen bleibendem und abzuerntenden Bestand dient und durch einen Antrieb antreibbar ist.

### Stand der Technik

Schneidwerke dienen in der Landwirtschaft als Erntevorsätze für selbstfahrende Erntemaschinen bei der Getreideernte, in der Regel für Mähdrescher, obwohl sie auch als Erntevorsatz für Feldhäcksler verwendet werden können, beispielsweise bei der Ernte von Ganzpflanzensilage. Schneidwerke umfassen einen Messerbalken, eine darüber angeordnete Haspel und einen Querförderer, der das abgeschnittene Erntegut an einen Schrägförderer des Mähdreschers oder Einzugsförderer des Feldhäckslers abgibt. Wird das Schneidwerk zur Rapsernte verwendet, werden Seitenschneidwerke (so genannte Rapstrenner) an den Seiten des Schneidwerks angebracht, die dazu dienen, das gerade abgeerntete Erntegut von dem an einer Seite der Erntemaschine stehen bleibenden Bestand zu trennen, denn der Raps bildet ein in sich verwachsenes Buschwerk, das ohne Rapstrenner nur mit hohen Verlusten durch herabfallende Körner zu ernten ist. Zudem wird der Schneidtisch nach vorn verlängert, indem er ausgezogen oder eine vorgelagerte Messertischverlängerung angebracht wird (s. DE 195 04 244 A1). Seitenschneidwerke können auch an Maisgebissen für Feldhäcksler angebracht werden, um dünnstängeliges, miteinander verflochtener oder liegender Mais zu ernten (DE 10 2013 003 970 A1).

Insbesondere zur Aufnahme liegenden Ernteguts werden Halmteiler an den vorderen Enden der Seitenwände von Schneidwerken angebracht, die unter das Erntegut greifen und es anheben, sodass es sich besser ernten lässt. Derartige Halmteiler können angetriebene Elemente (z.B. Messer, DE 102 31 072 A1 oder EP 2 647 276 A1, oder konische Schnecken mit Förderwendeln, DE 102 06 541 A1) umfassen und werden in Form konischer Schnecken mit Förderwendeln auch an Maiserntevorsätzen verwendet (DE 103 17 469 A1). Zudem wurde vorgeschlagen, die Halmteiler eines Maispflückers bei Kurvenfahrt des Mähdreschers aktiv um die Hochachse zu verstellen, damit der Halmteiler jeweils quer zur Vorwärtsrichtung steht (FR 2 192 443 A1), indem Zylinder zur Verstellung der Halmteiler an den Lenkzylinder gekoppelt werden. Halmteiler können zudem durch fernsteuerbare Motoren von einer Betriebs- in eine Transportstellung geschwenkt werden (DE 44 12 116 A1).

Üblicherweise befinden sich die beschriebenen, aktiv antreibbaren, seitlich am Erntevorsatz angebrachten Elemente, die zur Aufteilung des Ernteguts an der Grenze zwischen dem stehen bleibendem und dem gerade abzuerntenden Bestand dienen, an beiden Seiten des Erntevorsatzes. Der Grund hierfür liegt darin, dass es Betriebsbedingungen gibt, bei denen beide Elemente benötigt werden (z.B. beim Anschneiden eines Feldes, bei dem an beiden Seiten noch stehender Bestand verbleibt), oder wechselweise das linke oder rechte Element benötigt werden (z.B. wenn ein Feld unter Wendevorgängen von 180° abgeerntet wird).

Im Stand der Technik werden die besagten Elemente mangels einer getrennten Abschaltbarkeit stets gemeinsam betrieben, was den Nachteil hat, dass eines (nämlich jenes, das sich an der bereits abgeernteten Seite des Erntevorsatzes befindet, an dem kein Bestand mehr steht oder liegt, der noch zu trennen wäre) der Elemente in den meisten Fällen unnötig angetrieben wird, was den Energieverbrauch vergrößert und die Lebensdauer des Elements und seines Antriebs verkürzt. Allenfalls werden Schaltelemente in der Kabine bereitgestellt, die es dem Bediener ermöglichen, zwei Seitenschneidwerke von Hand getrennt voneinander ein- und auszuschalten (Zeitschrift "Profi", 4/2018, Seite 45).

### Problem

Während der kontinuierliche Betrieb der Elemente die oben erwähnten Nachteile aufweist, ist das manuelle Schalten der Elemente insofern nachteilig, dass die Bedienung der Schaltelemente genau dann erforderlich ist, wenn der Bediener eine ganze Anzahl anderer Bedienvorgänge durchzuführen hat, nämlich beim Wenden im Vorgewende, wo beispielsweise der Erntevorsatz auszuheben und die Lenkung zu betätigen ist. Die vorliegende Erfindung soll diesen Nachteil vermeiden bzw. dem Bediener die Arbeit erleichtern.

### Lösung

Die vorliegende Erfindung wird durch die Ansprüche definiert.

Eine Erntemaschine ist mit einem Erntevorsatz ausgestattet, an dem seitlich ein Element angebracht ist, das zur Aufteilung des Ernteguts an der Grenze zwischen stehen bleibendem und abzuerntenden Bestand dient und durch einen Antrieb antreibbar ist. Eine Anordnung zur selbsttätigen Kontrolle des Antriebs umfasst eine elektronische Steuereinrichtung, die eingerichtet (d.h. so programmiert und verschaltet) ist, anhand von ihr zugeführten Betriebsdaten den Antrieb des Elements ein- oder auszuschalten.

Mit anderen Worten erhält die elektronische Steuereinrichtung geeignete Betriebsdaten hinsichtlich des Betriebs der Erntemaschine und/oder des Erntevorsatzes und ist programmiert, anhand dieser Betriebsdaten zu erkennen, ob das Element gerade benötigt wird oder nicht und es entsprechend ein- oder auszuschalten. Die Arbeit des Bedieners wird somit erleichtert und ein unnötiger Betrieb eines grundsätzlich nicht benötigten Elements wird vermieden, was dessen Lebensdauer verlängert und den Energiebedarf reduziert.

Insbesondere kann die Steuereinrichtung programmiert sein, anhand der Betriebsdaten zu erkennen, an welcher Seite des Erntevorsatzes sich kein aufzunehmendes Erntegut befindet und das an der betroffenen Seite befindliche Element in Abhängigkeit davon abzuschalten und/oder anhand der ihr zugeführten Betriebsdaten zu erkennen, an welcher Seite des Erntevorsatzes sich aufzunehmendes Erntegut befindet und das an der betroffenen Seite befindliche Element in Abhängigkeit davon einzuschalten. Somit erkennt die Steuereinrichtung anhand der Betriebsdaten, auf welcher Seite des Erntevorsatzes sich kein Bestand an Erntegut befindet und schaltet das zugehörige Element in diesem Fall selbsttätig ab. Analog schaltet die Steuereinrichtung ein Element ein, das sich an einer Seite befindet, wo Erntegut aufzunehmen ist.

Die Betriebsdaten können die vom Erntevorsatz zurückgelegte Strecke betreffen. Hierzu kann mit einem Positionsbestimmungssystem der vom Erntevorsatz bzw. der von der ihn tragenden Erntemaschine zurückgelegte Weg registriert werden. Die Steuereinrichtung erzeugt eine Karte des Feldes und erkennt, auf welcher Seite des Erntevorsatzes sich der noch stehende Bestand und/oder der schon abgeerntete Bestand befindet. Hiervon abhängig wird das Element ein- bzw. ausgeschaltet. Zu dieser Vorgehensweise wird auf die Offenbarung der WO 03/005803 A1 verwiesen, deren Offenbarung durch Verweis mit in die vorliegenden Unterlagen aufgenommen wird. Gemäß der vorliegenden Erfindung wird nicht der Strohverteiler, sondern das Element abhängig von der anhand des Fahrwegs erkannten Seite des stehenden bzw. abgeernteten Ernteguts ein- oder ausgeschaltet.

Alternativ oder zusätzlich können die Betriebsdaten anhand von einem oder mehreren Sensoren bereitgestellt werden, die mit dem abzuerntenden Erntegut zusammenwirken. Ein derartiger Sensor kann beispielsweise vom Erntevorsatz zu einer Seite auf das dort ggf. vorhandene Erntegut gerichtet sein. Bei einer anderen Ausführungsform werden die Betriebsdaten mittels einer Kamera und eines Bildverarbeitungssystems erstellt. Die Kamera kann von der Erntemaschine oder vom Erntevorsatz nach vorn blicken und auch den seitlich neben dem Erntevorsatz (genau neben dem Erntevorsatz oder davor) liegenden Bereich des Feldes erfassen. Das Bildverarbeitungssystem erkennt anhand der Bildsignale der Kamera, auf welcher Seite des Erntevorsatzes sich der noch stehende Bestand und/oder der schon abgeerntete Bestand befindet. Hiervon abhängig wird das Element ein- bzw. ausgeschaltet.

Bei einer weiteren Ausführungsform können die Betriebsdaten von einem Vorgewendemanagement bereitstellbar sein. Hierbei gibt es eine (indirekte) Möglichkeit, anhand einer gerade durchgeführten Vorgewendesequenz, die vom Bediener oder einem Positionsbestimmungssystem veranlasst sein kann, zu erkennen, ob die Erntemaschine eine erste Art eines Wendevorgangs durchführt, anschließend an den der stehen bleibende Erntegutbestand sich auf der linken Seite befindet, oder eine zweite Art eines Wendevorgangs durchführt, anschließend an den der stehen bleibende Erntegutbestand sich auf der rechten Seite befindet. Hiervon abhängig wird das Element ein- bzw. ausgeschaltet. Die (erste oder zweite) Art des Wendevorgangs kann beispielsweise daran erkannt werden, ob ein Abtankvorgang eines Mähdreschers nach dem Wendevorgang der ersten oder zweiten Art stattgefunden hat. Es besteht auch die Möglichkeit, das Schalten des Elements direkt in die Vorgewendesequenz mit einzuprogrammieren. Die Betriebsdaten entsprechen in diesem Fall dem in der Vorgewendesequenz einprogrammierten Zustand des Elements (ein oder aus).

Eine weitere Möglichkeit liegt darin, die Stellung eines um die Hochachse verstellbaren Auswurfkrümmers eines Feldhäckslers zu erfassen. Befindet er sich an der linken Seite des Feldhäckslers kann davon ausgegangen werden, dass sich dort kein Bestand an Erntegut befindet und durch die Steuereinrichtung das linke Element ausgeschaltet und das rechte Element eingeschaltet werden. Analog kann davon ausgegangen werden, dass sich an der rechten Seite des Feldhäckslers kein Bestand befindet, wenn der Auswurfkrümmer sich auf seiner rechten Seite befindet und durch die Steuereinrichtung das rechte Element ausgeschaltet und das linke Element eingeschaltet werden. Ist der Auswurfkrümmer nach hinten gerichtet, kann davon ausgegangen werden, dass das Feld angeschnitten wird und die Steuereinrichtung kann beide Elemente einschalten.

Eine andere Möglichkeit liegt darin, dass die Betriebsdaten das Ein- oder Ausschalten einer Antriebseinrichtung des Erntevorsatzes und/oder das Ausheben des Erntevorsatzes und/oder eine Eingabe zum Verbringen des Erntevorsatzes in eine Transport- oder Erntestellung betreffen. Wenn der Bediener oder eine Automatik demnach die Antriebseinrichtung des Erntevorsatzes nach dem Beenden der Ernte abschaltet oder den Erntevorsatz im Vorgewende aushebt, werden selbsttätig beide Antriebe ausgeschaltet.

Analog erfolgt ein Einschalten der Antriebe bei Beginn der Ernte, wenn der Bediener oder die Automatik die Antriebseinrichtung des Erntevorsatzes einschaltet oder ihn nach dem Wendevorgang wieder absenkt. Auch kann der Antrieb aktiviert werden, das Element in die Transportstellung zu verbringen, wenn eine entsprechende Vorgabe einer Bedienerschnittstelle oder Automatik vorliegt. Analog kann der Antrieb aktiviert werden, das Element in eine Ernteposition zu verbringen, wenn eine entsprechende Vorgabe einer Bedienerschnittstelle oder Automatik vorliegt.

Die beschriebenen Möglichkeiten zur Auswertung der Betriebsdaten sind selbstverständlich kombinierbar. So kann die weg- oder sensorbasierte Erkennung der Seite des stehen bleibenden oder nicht (mehr) vorhandenen Erntegutbestandes mit der Berücksichtigung des Ein- oder Ausschaltens der Antriebseinrichtung des Erntevorsatzes und/oder des Aushebens des Erntevorsatzes kombiniert werden. Das Element auf der Seite ohne Erntegutbestand bleibt immer ausgeschaltet und das andere Element wird abhängig vom Status der Antriebseinrichtung des Erntevorsatzes und/oder des Aushebens ein- und ausgeschaltet.

Das Element kann ein Halmteiler sein und der Antrieb zur kurvengesteuerten Verschwenkung des Halmteilers und/oder zum Einschwenken des Halmteilers in eine Transportstellung dienen, oder es ist ein durch den Antrieb rotativ antreibbarer Halmteiler oder ein Seitenschneidwerk mit durch den Antrieb antreibbaren Messern.

Falls das Element ein Halmteiler ist und der Antrieb zur kurvengesteuerten Verschwenkung des Halmteilers dient, kann die Steuereinrichtung betreibbar sein, wenigstens einen der Antriebe zu kommandieren, den zugehörigen Halmteiler nach außen zu schwenken, falls die Betriebsdaten darauf hinweisen, dass der Bestand des Ernteguts gegenüber der Außenkante des Erntevorsatzes geringfügig nach außen versetzt endet.

Die vorliegende Erfindung kann an beliebigen Typen von Erntemaschinen verwendet werden, beispielsweise an Mähdreschern mit Schneidwerken oder Maispflückern oder Feldhäckslern mit Erntevorsätzen zur Maisernte.

### Ausführunasbeispiel

In den Zeichnungen sind zwei nachfolgend näher beschriebene Ausführungsbeispiele der Erfindung dargestellt. Es zeigen:
- Fig. 1: eine seitliche Ansicht eines selbstfahrenden Mähdreschers mit einem Schneidwerk, an dem ein antreibbares Element in Form eines Seitenschneidwerks angebracht ist,
- Fig. 2: eine Draufsicht auf den Mähdrescher der Figur 1,
- Fig. 3: eine seitliche Ansicht eines selbstfahrenden Mähdreschers mit einem Schneidwerk, an dem ein antreibbares Element in Form eines kurvengesteuerten Halmteilers angebracht ist, und
- Fig. 4: eine Draufsicht auf den Mähdrescher der Figur 3.

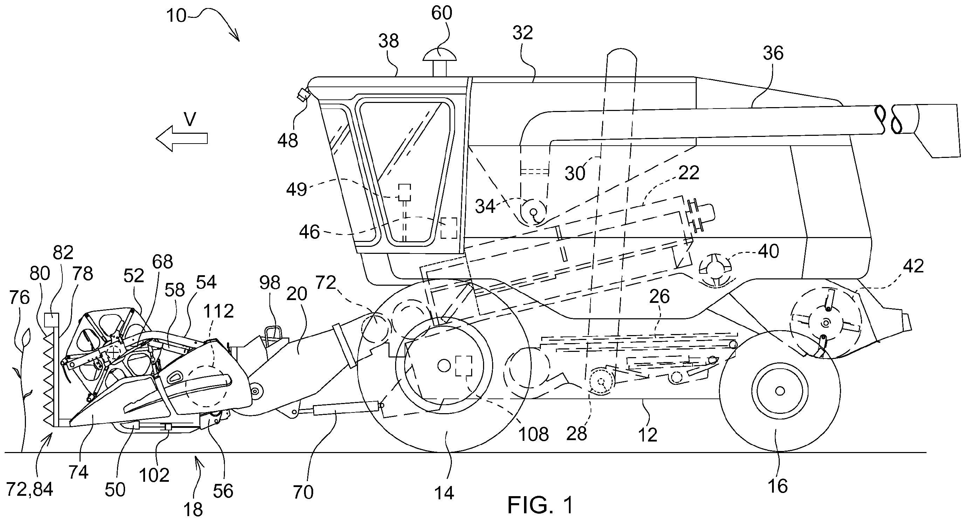

Die Figur 1 zeigt eine selbstfahrende Erntemaschine 10 in der Art eines Mähdreschers. Sie umfasst ein tragendes Fahrgestell 12, das sich durch antreibbare Vorderräder 12 und durch lenkbare Hinterräder 16 auf dem Boden abstützt und durch die Räder 14, 16 in einer Vorwärtsrichtung V über ein Feld bewegbar ist. Die Räder 14 und optional 16 werden durch Antriebsmittel (nicht gezeigt) in Drehung versetzt, um die Erntemaschine 10 über ein abzuerntendes Feld zu bewegen. Im Folgenden beziehen sich Richtungsangaben, wie vorn oder hinten oder seitlich, auf die Vorwärtsrichtung V der Erntemaschine 10, die in der Figur 1 nach links verläuft.

Am vorderen Bereich der Erntemaschine 10 ist ein Erntevorsatz 18 in Form eines Schneidwerks lösbar angebracht, um während des Erntevorgangs Erntegut 76 in Form von Korn oder anderen, druschfähigen Halmfrüchten vom Feld zu ernten und sie nach oben und hinten durch einen Schrägfördererzusammenbau 20 einem axialen Dreschzusammenbau 22 zuzuführen. Das Gemisch aus Korn und anderem Material, das durch Dreschkörbe oder Trennroste des axialen Dreschzusammenbaus 22 tritt, erreicht eine Reinigungseinrichtung 26. Von der Reinigungseinrichtung 26 gewonnenes, sauberes Korn wird durch eine Körnerschnecke 28 einem Kornelevator 30 zugeführt, der es in einen Korntank 32 fördert. Das saubere Korn im Korntank 32 kann durch ein Entladesystem mit einer Querförderschnecke 34 und einem Abtankrohr 36 auf ein Transportfahrzeug überladen werden. Die durch die axiale Dreschanordnung 22 ausgestoßenen Erntegutreste werden mittels einer Fördertrommel 40 einem Strohhäcksler 42 zugeführt, der sie häckselt und über die Breite des Schneidwerks über das Feld verteilt. Die erwähnten Systeme werden durch einen Verbrennungsmotor angetrieben und werden durch einen Bediener in einer Kabine 38 kontrolliert. Die gezeigte, axiale Dreschanordnung 22 mit einem oder mehreren axialen Dresch- und Trennrotoren ist lediglich eine beispielhafte Ausführung und kann durch eine tangentiale Dreschanordnung mit einer oder mehreren Dreschtrommeln und nachfolgenden Strohschüttlern oder Trennrotoren ersetzt werden.

Das Schneidwerk umfasst einen sich hin- und her bewegenden Messerbalken 50, der sich im Wesentlichen über die gesamte Breite des Schneidwerks 18 erstreckt. Der Messerbalken 50 kann, wie im Stand der Technik bekannt, starr oder flexibel sein. Eine Haspel 52 ist am Schneidwerk 18 angebracht und erstreckt sich im Wesentlichen über die gesamte Breite des Schneidwerks 18 (oder einen Teil davon). Die äußeren Enden der Haspel 52 sind an Armen 54 abgestützt, von denen in der Figur 1 nur einer gezeigt wird. Die Arme 54 haben rückwärtige Enden, die um sich quer zur Vorwärtsrichtung erstreckende Achsen am Rahmen 56 des Schneidwerks, 18, der sich ebenfalls über die Breite des Schneidwerks 18 erstreckt, angelenkt sind und sich von dort nach vorn erstrecken. Jeder Arm 54 ist mit einem Aktor 58 in Form eines hydraulischen Zylinders gekoppelt, der schwenkbar am Rahmen 56 und am Arm 54 angelenkt ist. Die Arme 54 und somit die Haspel 52 werden durch ein Verstellen (Einziehen und Ausstrecken) des Aktors 58 abgesenkt und angehoben.

Ein zweiter Aktor 68 in Form eines hydraulischen Zylinders ist angepasst, die horizontale Position der Haspel 52 zu verstellen, indem er eine Stützlagerung des Rohrs 62 entlang des Arms 54 bewegt. Das Schneidwerk 18 umfasst auch einen Querförderer 112, der als Schneckenförderer (wie gezeigt) oder Förderbänder ausgeführt sein kann, um das vom Messerbalken 50 abgeschnittene Erntegut zur Mitte des Schneidwerks zu fördern und es von dort durch eine rückwärtige Öffnung im Rahmen 56 dem Schrägförderer 20 zuzuführen. Die Höhe des Schneidwerks 18 über dem Boden wird durch einen vierten Aktor 70 definiert, welcher den Schrägförderer 20 und somit das lösbar daran befestigte Schneidwerk 18 um eine sich quer zur Vorwärtsrichtung erstreckende, horizontale Achse 72 gegenüber dem Fahrgestell 12 der Erntemaschine 10 verschwenkt. Der Aktor 70 wird durch eine elektronische Steuereinrichtung 46 basierend auf einer Bedienereingabe über eine Bedienerschnittstelle 44 oder selbsttätig kontrolliert, wobei die elektronische Steuereinrichtung 46 das Schneidwerk 18 in einer gewünschten Höhe über dem Boden halt oder es mit einem gewünschten Druck über den Boden führt. Wie im Stand der Technik bekannt, kann das Schneidwerk 18 zusätzlich um eine sich horizontal, in Vorwärtsrichtung erstreckende Achse verschwenken, um der Bodenkontur zu folgen, ebenfalls durch die Steuereinrichtung 46 und einen zugehörigen Aktor kontrolliert. Ein Aktor 98 kann die Neigung des Schneidwerks 18 um die Querachse gegenüber dem Schrägförderer 20 kontrollieren.

Die Länge des Schneidtisches ist durch einen Aktor 102 kontrollierbar. Demnach ist die horizontale Position des Messerbalkens 50 gegenüber dem Rahmen 56 des Schneidwerks 18 durch den Aktor 102 verstellbar, der durch die Bedienerschnittstelle 44 und die elektronische Steuereinrichtung 46 kontrolliert wird. Mögliche Ausführungsformen eines Schneidwerks 18 mit längenveränderlichem Schneidtisch sind in der EP 2 803 257 A1 und der WO 03/049532 A1 gezeigt. Die Steuereinrichtung 46 kann zudem einen Aktor 108 zur Vorgabe der Vortriebsgeschwindigkeit der Erntemaschine 10 kontrollieren.

Zur Rapsernte sind an den vorderen Enden der äußeren (bezüglich der Vorwärtsrichtung V linken und rechten) Seitenwänden 74 des Erntevorsatzes 18 als Seitenschneidwerk 84 ausgeführt, aktiv antreibbare Elemente 72 angeordnet. Die Seitenschneidwerke umfassen jeweils einen vertikalen Träger 78 mit an seiner Vorderseite angeordneten Messern 80, die durch einen Antrieb 82 in eine Hin- und Herbewegung versetzbar sind. Der Antrieb 82 kann als Elektro- oder Hydraulikmotor oder als hydraulischer Muskel (s. DE 10 2005 052 038 A1) ausgeführt sein, oder der Antrieb erfolgt über den Antriebsstrang des Messerbalkens 50 und ist über eine fremdkraftbetätigte Kupplung (nicht gezeigt) ein- und ausschaltbar.

Die Kontrolle, d.h. das Ein- und Ausschalten der Antriebe 82 der beiden Elemente 72 erfolgt durch die Steuereinrichtung 46, die sie abhängig davon ein- und ausschaltet, an welcher Seite des Erntevorsatzes 18 sich noch stehender Erntegutbestand befindet (das betreffende Element 72 wird eingeschaltet) bzw. an welcher Seite des Erntevorsatzes 18 sich kein stehender Bestand (mehr) befindet, weil er schon abgeerntet wurde oder die betreffende Seite am Feldrand liegt (das betreffende Element 72 wird ausgeschaltet). Hierzu sind zwei Kameras 48 ist an der Vorderseite des Daches der Kabine 38 angebracht und dienen dazu, das Erntegut 76 bzw. das Feld vor der Erntemaschine 10 und auch seitlich neben dem Erntevorsatz 18 zu erfassen. Eine Bildverarbeitung erhält die Bildsignale der Kamera 48 und gibt Signale an die Steuereinrichtung 46, die darauf hinweisen, an welcher Seite des Erntevorsatzes 18 noch Erntegut steht und an welcher Seite nicht. Falls auf beiden Seiten des Erntevorsatzes 18 noch Erntegut steht, z.B. beim Anschneiden des Felds, schaltet die Steuereinrichtung 46 die Antriebe 82 beider Elemente 72 ein. Die Steuereinrichtung 46 kontrolliert somit den Betrieb der Antriebe 82 der Elemente 72 abhängig von den Signalen der Bildverarbeitung.

Als Alternative oder Zusatz zur sensorbasierten Schaltung der Antriebe 82 der Elemente 72 ist die Steuereinrichtung 46 mit einer Positionsbestimmungseinrichtung 60 zum Empfang von Positionssignalen von Satelliten verbunden. Die Steuereinrichtung 46 ist im Vorab mit einer Karte des abzuerntenden Feldes beaufschlagt worden oder erzeugt diese beim Abernten des Feldes selbst und erkennt anhand der Karte, in der sie abgeerntete Bereiche des Feldes einträgt und die abzuerntenden Bereiche eingetragen sind, und der aktuellen Position, an welcher Seite des Erntevorsatzes 18 sich Erntegut befindet (der betreffende Antrieb 82 wird eingeschaltet) und an welcher Seite sich kein Erntegut (mehr) befindet (der betreffende Antrieb 72 wird abgeschaltet).

Als weitere Möglichkeit zur Ansteuerung der Antriebe 82 liegt noch die Einbindung in ein von der Steuereinrichtung 46 kontrolliertes Vorgewendemanagement (wie es an sich z.B. aus EP 1 380 202 A1 bekannt ist) vor, indem die vorprogrammierte oder bei der Arbeit auf dem Feld gelernte Vorgewendesequenz auch Vorgaben für die Ein- oder Abschaltung der Antriebe enthält. Hierbei sind zwei unterschiedliche Sequenzen erforderlich, an deren Anschluss das linke oder rechte Element 72 aktiv ist. Es kann auch nur eine einzige Sequenz vorgesehen sein und die Steuereinrichtung anhand anderer Daten, z.B. der Betätigung des Abtankrohrs 36 und der Anzahl der Abrufe der Sequenz erkennt, auf welcher Seite sich der stehende bzw. abgeerntete Erntegutbestand befindet.

Auch besteht die Möglichkeit, ein ansonsten immer oder basierend auf der beschriebenen Sensorik und/oder Wegerkennung eingeschaltetes Element auszuschalten, wenn eine Antriebseinrichtung des Erntevorsatzes 18 durch den Bediener oder eine Automatik ein- oder ausgeschaltet oder der Erntevorsatz 18 mit dem Aktor 70 ausgehoben wird.

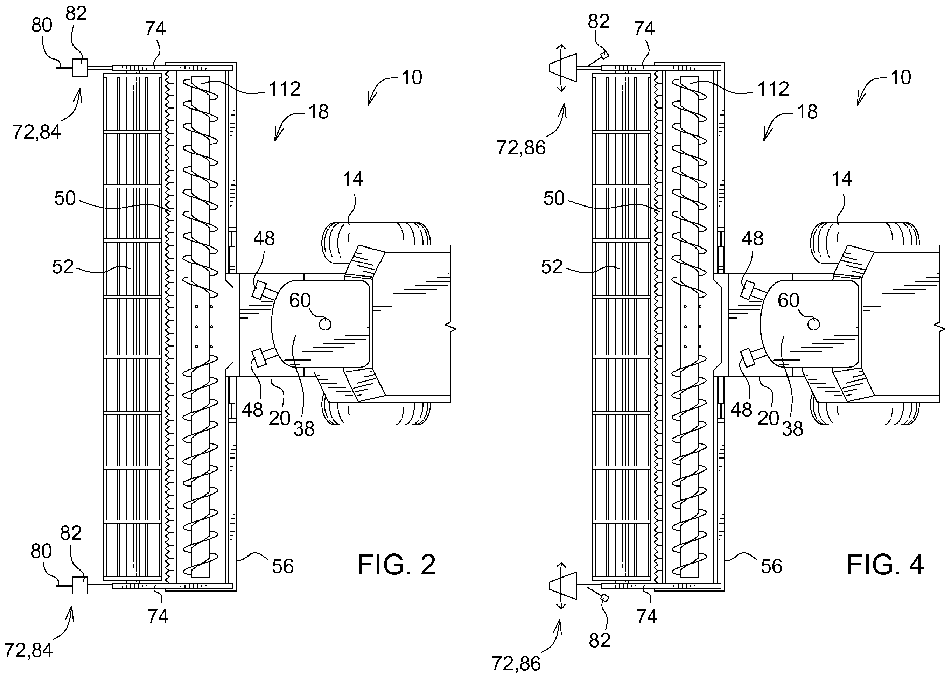

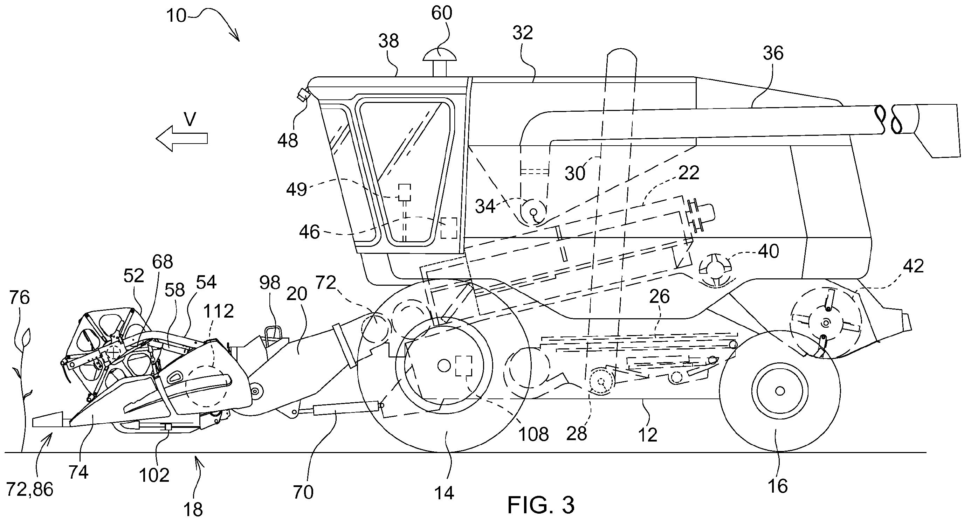

Bei der zweiten Ausführungsform nach den Figuren 3 und 4 ist das antreibbare Element 72 ein durch den Antrieb 82 um die Hochachse verstellbarer Halmteiler 86. Die Steuereinheit 46 kontrolliert den Antrieb 82 des jeweils aktiven (eingeschalteten) Elements 72 abhängig vom Lenkwinkel der Erntemaschine 10, um ihn möglichst quer zur aktuellen Fahrtrichtung des Halmteilers 86 zu orientieren. Abhängig von der Seite, an der sich stehender oder fehlender Erntegutbestand befindet, wird jeweils nur der Antrieb 82 jenes Elements 72 aktiviert, das dem stehenden Bestand benachbart ist, während der andere Antrieb 82 ausgeschaltet bleibt und vorzugweise durch die Steuereinrichtung 46 kommandiert wird, den Halmteiler 86 in eine nach vorn oder außen oder innen gerichtete Ruhestellung zu verbringen. Die Erkennung der Seite des stehenden oder fehlenden (abgeernteten) Erntegutbestandes und die Kontrolle der Antriebe 82 erfolgt in der Weise, wie sie bezüglich der ersten Ausführungsform der Figuren 1 und 2 beschrieben wurde.

Die aktive Ansteuerung der Halmteiler 86 der zweiten Ausführungsform ermöglicht es auch, die Halmteiler 86 bei Bedarf durch die Antriebe 82 in eine Transportposition zu verbringen, in der sie nach innen geschwenkt sind. Dazu kann die Steuereinrichtung eine entsprechende Eingabe vom Bediener über eine Schnittstelle erhalten, oder der Bediener kann einen Befehl zum Fertigmachen des Erntevorsatzes zum Straßentransport über die Schnittstelle eingeben, woraufhin die Steuereinrichtung 46 nicht nur die Antriebe 82 veranlasst, die Halmteiler 86 nach innen einzuschwenken, sondern auch andere Bestandteile des Erntevorsatzes in eine Transportposition verbringt, z.B. den Aktor 58 kommandiert, die Haspel 50 abzusenken. Analog, jedoch in umgekehrter Richtung, kann vorgegangen werden, wenn der Erntevorsatz in die Erntestellung zu verbringen ist.

Eine weitere Möglichkeit, welche die durch die Antriebe 82 verstellbaren Halmteiler 86 der Figuren 3 und 4 bieten, liegt darin, sie nach außen zu verstellen, wenn ein auf dem Feld verbleibender Restbestand abzuernten bleibt, dessen Breite etwa gleich der aktiven Breite des Erntevorsatzes 18 oder geringfügig größer ist, d.h. noch im Erfassungsbereich des nach außen verschwenkten Halmteilers 86 liegt. Dadurch wird erreicht, dass das im Randbereich des Erntevorsatzes 18 oder seitlich davon nach außen versetzt stehendes Erntegut nach innen gelenkt und abgeerntet wird, ohne stehen zu bleiben oder eine weitere Überfahrt zum Abernten zu erfordern. Die Erkennung einer derartigen Situation kann durch die Steuereinrichtung 46 in der oben beschriebenen Weise, d.h. anhand der Bildsignale der Kameras 48 und/oder der Karte des Felds, in der abgeerntete und/oder noch abzuerntende Bereiche eingetragen sind und der mit der Positionsbestimmungseinrichtung 60 erfassten Position der Erntemaschine 10, erfolgen. Diese Vorgehensweise ist auch dann möglich, wenn das Erntegut nur auf einer Seite des Erntevorsatzes 18 diesem nach außen geringfügig nach außen versetzt einläuft, weiter außen jedoch kein Erntegut mehr vorhanden ist.

## Patentansprüche

1. Erntemaschine (10) mit einem Erntevorsatz (18), an dem seitlich ein Element (72) angebracht ist, das zur Aufteilung des Ernteguts an der Grenze zwischen stehen bleibendem und abzuerntenden Bestand dient und durch einen Antrieb (82) antreibbar ist, **gekennzeichnet durch** eine Anordnung zur selbsttätigen Kontrolle des Antriebs (82), die eine elektronische Steuereinrichtung (46) umfasst, die eingerichtet ist, anhand von ihr zugeführten Betriebsdaten hinsichtlich des Betriebs der Erntemaschine (10) und/oder des Erntevorsatzes (18) zu erkennen, ob das Element (72) benötigt wird und den Antrieb (82) des Elements (72) darauf basierend ein- oder auszuschalten.

2. Erntemaschine (10) nach Anspruch 1, wobei die Steuereinrichtung (46) programmiert ist, anhand der Betriebsdaten zu erkennen, an welcher Seite des Erntevorsatzes (18) sich kein aufzunehmendes Erntegut befindet und das an der betroffenen Seite befindliche Element (72) in Abhängigkeit davon abzuschalten und/oder anhand der ihr zugeführten Betriebsdaten zu erkennen, an welcher Seite des Erntevorsatzes (18) sich aufzunehmendes Erntegut befindet und das an der betroffenen Seite befindliche Element (72) in Abhängigkeit davon einzuschalten.

3. Erntemaschine (10) nach Anspruch 1 oder 2, wobei die Betriebsdaten die vom Erntevorsatz (18) zurückgelegte Strecke betreffen.

4. Erntemaschine (10) nach einem der vorhergehenden Ansprüche, wobei die Betriebsdaten anhand von einem oder mehreren Sensoren erzeugbar sind, die mit dem abzuerntenden Erntegut zusammenwirken.

5. Erntemaschine (10) nach Anspruch 4, wobei die Betriebsdaten mittels einer Kamera (48) und eines Bildverarbeitungssystems erstellbar sind.

6. Erntemaschine (10) nach Anspruch 1, wobei die Betriebsdaten von einem Vorgewendemanagement und/oder einer Steuerung eines Auswurfkrümmers bereitstellbar sind.

7. Erntemaschine (10) nach Anspruch 1, wobei die Betriebsdaten das Ein- oder Ausschalten einer Antriebseinrichtung des Erntevorsatzes (18) und/oder das Ausheben oder Absenken des Erntevorsatzes (18) und/oder eine Eingabe zum Verbringen des Erntevorsatzes in eine Transport- oder Erntestellung betreffen.

8. Erntemaschine (10) nach einem der vorhergehenden Ansprüche, wobei das Element (72) ein Halmteiler (86) ist und der Antrieb (82) zur kurvengesteuerten Verschwenkung des Halmteilers und/oder zum Einschwenken des Halmteilers in eine Transportstellung dient und/oder wobei das Element (72) ein durch den Antrieb (82) rotativ antreibbarer Halmteiler ist und/oder wobei das Element ein Seitenschneidwerk (84) mit durch den Antrieb (82) antreibbaren Messern (80) ist.

9. Erntemaschine (10) nach Anspruch 8, wobei das Element (72) ein Halmteiler (86) ist und der Antrieb (82) zur kurvengesteuerten Verschwenkung des Halmteilers dient und die Steuereinrichtung (46) betreibbar ist, wenigstens einen der Antriebe (82) zu kommandieren, den zugehörigen Halmteiler (86) nach außen zu schwenken, falls die Betriebsdaten darauf hinweisen, dass der Bestand des Ernteguts gegenüber der Außenkante des Erntevorsatzes (18) geringfügig nach außen versetzt endet.

## Claims

1. Harvester (10) having a harvesting header (18), on which is fitted laterally an element (72) which serves to divide up the crop at the boundary between standing crop and crop to be harvested and which can be driven by a drive (82), **characterized by** an arrangement for automatically controlling the drive (82), the arrangement comprising an electronic control device (46), which is designed to detect, by way of operating data supplied to it relating to the operation of the harvester (10) and/or of the harvesting header (18), whether the element (72) is required and, on this basis, to switch the drive (82) of the element (72) on or off.

2. Harvester (10) according to Claim 1, wherein the control device (46) is programmed to detect, by way of the operating data, the side of the harvesting header (18) on which there is no crop to be picked up and, in dependence thereon, to switch off the element (72) located on the relevant side, and/or to detect, by way of the operating data supplied to it, the side of the harvesting header (18) on which there is crop to be picked up and, in dependence thereon, to switch on the element (72) located on the relevant side.

3. Harvester (10) according to Claim 1 or 2, wherein the operating data relate to the distance covered by the harvesting header (18).

4. Harvester (10) according to one of the preceding claims, wherein the operating data can be generated by way of one or more sensors which interact with the crop to be harvested.

5. Harvester (10) according to Claim 4, wherein the operating data can be created by means of a camera (48) and of an image-processing system.

6. Harvester (10) according to Claim 1, wherein the operating data can be provided by a headland-management system and/or a controller of a discharge spout.

7. Harvester (10) according to Claim 1, wherein the operating data relate to the switching on or off of a drive device of the harvesting header (18) and/or the lifting or lowering of the harvesting header (18) and/or an input for moving the harvesting header into a transporting or harvesting position.

8. Harvester (10) according to one of the preceding claims, wherein the element (72) is a crop divider (86) and the drive (82) serves for the cam-controlled pivoting of the crop divider and/or for pivoting the crop divider into a transporting position, and/or wherein the element (72) is a crop divider which can be driven in rotation by the drive (82), and/or wherein the element is a side cutting unit (84) having cutters (80) which can be driven by the drive (82).

9. Harvester (10) according to Claim 8, wherein the element (72) is a crop divider (86) and the drive (82) serves for cam-controlled pivoting of the crop divider and the control device (46) can be operated so as to command at least one of the drives (82) to pivot the associated crop divider (86) outwards if the operating data indicate that the crop stand terminates in a slightly outwardly offset state in relation to the outer edge of the harvesting header (18).

## Revendications

1. Moissonneuse (10) avec une tête de récolte (18) au niveau de laquelle un élément (72) est disposé en côté qui sert à distribuer le produit de la récolte à la frontière entre la culture à conserver et à récolter et entraîné par un entraînement (82), **caractérisée par** un dispositif de commande automatique de l'entraînement (82) qui comprend un dispositif de commande électronique (46) conçu pour identifier, à l'aide de ses données de fonctionnées, par rapport au fonctionnement de la moissonneuse (10) et/ou de la tête de récolte (18), si l'élément (72) est nécessaire et pour connecter ou déconnecter l'entraînement (82) de l'élément (72) sur la base de cette information.

2. Moissonneuse (10) selon la revendication 1, le dispositif de commande (46) étant programmé pour identifier, à l'aide des données de fonctionnement, au niveau de quel côté de la tête de récolte (18) il n'y a pas de produit de récolte à récolter et, en fonction de cela, déconnecter l'élément (72) se trouvant du côté concerné, et/ou pour identifier, à l'aide des données de fonctionnement qui lui sont fournies, au niveau de quel côté de la tête de récolte (18) se trouve du produit de la récolte à récolter et, en fonction de cela, connecter l'élément (72) se trouvant du côté concerné.

3. Moissonneuse (10) selon la revendication 1 ou 2, les données de fonctionnement concernent le tronçon placé derrière la tête de récolte (18).

4. Moissonneuse (10) selon l'une quelconque des revendications précédentes, les données de fonctionnement pouvant être produites à l'aide d'un ou de plusieurs capteurs interagissant avec le produit de récolte à récolter.

5. Moissonneuse (10) selon la revendication 4, les données de fonctionnement pouvant être établies au moyen d'une caméra (48) et d'un système de traitement d'images.

6. Moissonneuse (10) selon la revendication 1, les données de fonctionnement étant mises à disposition par un système de gestion d'avancement et/ou un élément de commande d'une goulotte.

7. Moissonneuse (10) selon la revendication 1, les données de fonctionnement concernant la connexion ou déconnexion d'un dispositif d'entraînement de la tête de récolte (18) et/ou la levée ou l'abaissement de la tête de récolte (18) et/ou une saisie amenant la tête de récolte dans une position de transport ou de récolte.

8. Moissonneuse (10) selon l'une quelconque des revendications précédentes, l'élément (72) étant un déchaumeur (86) et l'entraînement (82) servant à faire pivoter de façon commandée dans les virages le déchaumeur et/ou à faire pivoter vers l'intérieur le déchaumeur dans une position de transport et/ou l'élément (72) étant un déchaumeur pouvant être entraîné en rotation par l'entraînement (82) et/ou l'élément étant un système de découpe latérale (84) avec des couteaux (80) pouvant être entraîné par l'entraînement (82).

9. Moissonneuse (10) selon la revendication 8, l'élément (72) étant un déchaumeur (86) et l'entraînement (82) pouvant être entraîné pour faire pivoter de façon commandée dans les virages le déchaumeur et le dispositif de commande (46) pouvant être entraîné, pour commander au moins un des entraînements (82), pour faire pivoter vers l'extérieur le déchaumeur (86) associé si les données de fonctionnement indiquent que la culture du produit de la récolte se termine de façon légèrement décalée vers l'extérieur par rapport à l'arête de la tête de récolte (18).
